(19) Europäisches Patentamt
European Patent Office
Office européen des brevets

(11) **EP 1 697 030 B1**

(12) **EUROPEAN PATENT SPECIFICATION**

(45) Date of publication and mention
of the grant of the patent:
**29.04.2009 Bulletin 2009/18**

(51) Int Cl.:
**B01F 17/00** (2006.01)    **C08K 9/10** (2006.01)
**C09D 11/00** (2006.01)    **C09B 67/00** (2006.01)
**C09C 3/10** (2006.01)

(21) Application number: **04806033.9**

(22) Date of filing: **13.12.2004**

(86) International application number:
**PCT/GB2004/005215**

(87) International publication number:
**WO 2005/061087 (07.07.2005 Gazette 2005/27)**

(54) **PROCESS FOR ENCAPSULATING SOLID PARTICULATES**

VERFAHREN ZUR VERKAPSELUNG VON FESTEN TEILCHENFÖRMIGEN MATERIALIEN

PROCEDE D'ENCAPSULATION DE PARTICULES SOLIDES

(84) Designated Contracting States:
**AT BE BG CH CY CZ DE DK EE ES FI FR GB GR
HU IE IS IT LI LT LU MC NL PL PT RO SE SI SK TR**

(30) Priority: **20.12.2003 GB 0329601**

(43) Date of publication of application:
**06.09.2006 Bulletin 2006/36**

(73) Proprietor: **FUJIFILM Imaging Colorants Limited
Blackley,
Manchester
M9 8ZS (GB)**

(72) Inventors:
• **O'DONNELL, John, Patrick
Blackley,
Manchester M9 8ZS (GB)**
• **YEATES, Stephen George,
University of Manchester
Oxford Road,
Manchester M13 9PL (GB)**

• **ANNABLE, Tom
Blackley,
Manchester M9 8ZS (GB)**

(74) Representative: **Mayall, John et al
Fujifilm Imaging Colorants Limited
Intellectual Property Group
P.O. Box 42
Hexagon Tower
Blackley, Manchester
M9 8ZS (GB)**

(56) References cited:
**EP-A- 0 572 128**        **EP-A- 1 086 975**
**WO-A-00/20520**        **US-A- 3 876 603**

• **DATABASE WPI Section Ch, Week 199309
Derwent Publications Ltd., London, GB; Class
A32, AN 1993-070329 XP002321668 & JP 05
015772 A (NIPPON INST BIOLOGICAL SCIENCE)
26 January 1993 (1993-01-26)**

**Description**

This invention relates to a process for preparing encapsulated particulate solids and to paints, mill-bases and inks (especially ink jet printing inks) containing such solids.

Many inks, mill-bases, paints and the like require effective dispersants for uniformly distributing a particulate solid in a liquid vehicle. The liquid vehicle may vary from highly polar (e.g. water) to highly non-polar (e.g. toluene). Known dispersants tend to work effectively only with liquid vehicles within a range of polarities. Outside such polarities the particulate solid typically flocculates. Thus, a range of dispersants has been developed for liquid vehicles of different polarities.

Conventional dispersants suffer from a disadvantage in that they may readily be displaced from the surface of a particulate solid by a more strongly absorbing material. This can result in destabilisation and flocculation of the solid from dispersions containing it.

The problems associated with conventional dispersants can be addressed in part by encapsulating a particulate solid within a cross-linked dispersant. The process of encapsulation is typically performed in a liquid medium. A cross-linkable dispersant can be mixed with a particulate solid distributed in a liquid medium, the dispersant then adsorbs onto the particulate solid surface and the dispersant is then cross-linked via its cross-linkable groups by means of a cross-linking agent to encapsulate the particulate solid within the cross-linked dispersant. Such an approach is described in US 6,262,152, WO 00/20520, JP 1997-10483, JP 1999-152424 and EP 732,381.

We have found that the encapsulation processes described in the prior art often suffer from significant deficiencies. For example, US 6,262,152 and WO00/20520 describe media-insoluble cross-linking agents which we have found to be difficult to dissipate into the liquid medium and tend to cause flocculation of the particulate solid during addition of the cross-linking agent and/or during the cross-linking reaction.

In JP1999-152424 and JP1997-10483 the initial dispersants used prior to cross-linking are relatively hydrophobic. We have found this results in poor wetting and milling of the pigment used and requires an organic solvent to fully dissolve the dispersant. The organic solvent is typically removed after cross-linking which adds further process steps. The resultant encapsulated pigment has a relatively large particle size and exhibits poor stability. EP 732,381 describes a hydrophobic urethane cross-linking composition which is delivered with a colorant and an organic solvent into an aqueous medium. Such hydrophobic cross-linking compositions result in hydrophobic in-situ dispersants which we have found give rise to relatively coarse and less stable dispersions.

EP 1,086,975 describes water-based pigment dispersions in which a pigment is dispersed with a thermoplastic resin containing a water soluble or self-emulsifying carboxylic group.

The hydrophobicity of a dispersant can be characterised by its Log P value. Log P is the logarithm (base 10) of the partitioning co-efficient of a substance between n-octanol and water as, for example, described in L. G. Danielsson and Y. H. Zhang, Trends in Anal. Chem, 1996, 15, 188. High Log P values signify hydrophobic compounds (e.g. Styrene has Log P value of approximately 3) and low Log P values signify hydrophilic compounds (e.g. Acrylic acid has a Log P value of approximately 0). Log P values can be calculated which are in good agreement with experimental determinations (Analytical Sciences Sept 2002, Vol 18, pages 1015 to 1020). We prefer calculated Log P values, however, because commercial computer programmes exist which can accurately and quickly calculate the Log P values of large numbers of real or hypothetical compounds.

According to a first aspect of the present invention there is provided a process for preparing an encapsulated particulate solid comprising reacting a poly vinyl dispersant with a cross-linking agent in the presence of a particulate solid and a liquid medium, **characterised in that:**

a) the poly vinyl dispersant has a calculated Log P of less than 1.8, at least one cross-linkable group and an acid value of from 30 to 150mg KOH/g of dispersant;
b) the cross-linking agent is substantially soluble in the liquid medium and has at least one cross-linking group which is reactive towards the cross-linkable group(s) of the dispersant; and
c) the reaction comprises cross-linking the poly vinyl dispersant with the cross-linking agent, thereby encapsulating the particulate solid within the cross-linked dispersant.

The process of the present invention has a number of technical advantages over the prior art. In particular, the process allows the preparation of encapsulated particulate solids which demonstrate good dispersion stability in liquid media. Further the process results in very little aggregation of the particulate solid during the reaction step or during the addition of the cross-linking agent. Such aggregation results in larger particles which are undesirable in most applications and which would need to be removed. Removal of oversized particles, using for example filtration, adds undesirable process steps and is wasteful of the desired product. We have found that the use of a dispersant having a calculated Log P value of less than 1.8 is particularly advantageous in providing a fine and stable initial dispersion of the particulate solid prior to encapsulation. We have further found that the use of a dispersant with such a calculated Log P value improves the stability of the particulate solid during and after the encapsulation process.

Preferably the process is performed such that the cross-linked dispersant encapsulates single particulate solid particles. Some of the particulate solid may exist as clusters, thus, some of the encapsulated particulate solid particles may exist as cross-linked dispersant fixed to clusters of particulate solid particles. It is preferred that most or substantially all of the encapsulated particles contain only one particle of particulate solid.

The particulate solid may be any inorganic or organic particulate solid or a mixture of such solids which is at least partially insoluble in the liquid medium.

Examples of suitable particulate solids are inorganic and organic pigments, extenders, fillers for paints and plastics materials; disperse dyes and water-soluble dyes in liquid media which do not fully dissolve said dyes; optical brightening agents; textile auxiliaries for solvent dyebaths, inks and other solvent application system; solids for oil-based and inverse-emulsion drilling muds; particulate ceramic materials; and magnetic particles (e.g. for use in magnetic recording media); biocides; agrochemicals; and pharmaceuticals.

Preferably, the particulate solid is a colorant, more preferably a pigment.

A preferred particulate solid is an organic pigment, for example any of the pigments described in the Third Edition of the Colour Index (1971) and subsequent revisions of, and supplements thereto, under the chapter headed "Pigments". Examples of organic pigments are those from the azo (including disazo and condensed azo), thioindigo, indanthrone, isoindanthrone, anthanthrone, anthraquinone, isodibenzanthrone, triphendioxazine, quinacridone and phthalocyanine series, especially copper phthalocyanine and its nuclear halogenated derivatives, and also lakes of acid, basic and mordant dyes. Carbon black, although often regarded as being inorganic, behaves more like an organic pigment in its dispersing properties and is another example of a suitable particulate solid. Preferred organic pigments are phthalocyanines, especially copper phthalocyanine pigments, azo pigments, indanthrones, anthranthrones, quinacridones and carbon black pigments.

Preferred inorganic particulate solids include: extenders and fillers, e.g. talc, kaolin, silica, barytes and chalk; particulate ceramic materials, e.g. alumina, silica, zirconia, titania, silicon nitride, boron nitride, silicon carbide, boron carbide, mixed silicon-aluminium nitrides and metal titanates; particulate magnetic materials e.g. magnetic oxides of transition metals, especially iron and chromium, e.g. gamma-$Fe_2O_3$, $Fe_3O_4$, and cobalt-doped iron oxides, calcium oxide, ferrites, especially barium ferrites; and metal particles, especially metallic iron, nickel, cobalt and alloys thereof.

Where the process of the present invention is used to make encapsulated particulate solids for use in ink jet printing inks the pigment is preferably a cyan, magenta, yellow or black pigment.

The liquid medium may be non-polar but is preferably polar. "Polar" liquids are generally capable of forming moderate to strong intra-molecular bonds, e.g. as described in the article entitled "A Three Dimensional Approach to Solubility" by Crowley et al in Journal of Paint Technology, Vol. 38, 1966, at page 269. Polar liquid media generally have a hydrogen bonding number of 5 or more as defined in the abovementioned article.

Examples of suitable polar liquid media include ethers, glycols, alcohols, amides and especially water. Numerous specific examples of polar liquid media are given in the book entitled "Compatibility and Solubility" by Ibert Mellan (published in 1968 by Noyes Development Corporation) in Table 2.14 on pages 39-40.

Preferred polar liquid media contain up to, and including, a total of 6, 7 or 8 carbon atoms, especially $C_{1-6}$-alkanols. As examples of the preferred polar liquid media there may be mentioned glycols and glycol esters and ethers, e.g. ethylene glycol, 2-ethoxyethanol, 3-methoxypropylpropanol, 3-ethoxypropylpropanol; alkanols, e.g. methanol, ethanol, n-propanol, isopropanol, n-butanol and isobutanol; cyclic ethers and amides, especially cyclic amides, e.g. 2-pyrrolidone and n-methyl pyrrolidone; more especially water; and combinations thereof.

The polar liquid medium is optionally a polyol, that is to say, a liquid with two or more hydroxy groups. Preferred polyols include glycerol, alpha-omega diols and especially alpha-omega diol ethoxylates.

Preferably the liquid medium comprises water as this tends to result in a particularly stable and fine encapsulated particulate solid. Preferably the liquid medium comprises from 1 to 100%, more preferably from 10 to 100%, especially from 20 to 90% and more especially from 30 to 80% water by weight based on all the liquid components of the liquid medium.

Preferred non-polar liquid media include non-halogenated aromatic hydrocarbons (e.g. toluene and xylene); halogenated aromatic hydrocarbons (e.g. chlorobenzene, dichlorobenzene and chlorotoluene); non-halogenated aliphatic hydrocarbons (e.g. linear and branched aliphatic hydrocarbons containing six or more carbon atoms, including fully and partially saturated), halogenated aliphatic hydrocarbons (e.g. dichloromethane, carbon tetrachloride, chloroform, trichloroethane); natural non-polar liquids (e.g. vegetable oil, sunflower oil, linseed oil, terpenes and fatty glycerides); and combinations thereof.

The liquid medium may comprise a mixture of liquids which may be polar or non-polar liquids. It is preferred that at least one component of the liquid medium is a polar liquid, more preferably all the components of the liquid medium are polar.

Preferably the liquid medium is not reactive towards either the cross-linking agent or the poly vinyl dispersant, e.g. the cross-linking agent and dispersant react with each other more quickly than they react with the liquid medium or any other component present during the process. Thus, for example where the cross-linking agent is an isocyanate the liquid medium preferably contains no groups which are reactive with isocyanate groups such as amine, thiol and hydroxyl groups (unreactive and weakly reactive amine, thiol and hydroxy groups can be tolerated).

Regarding the term substantially soluble, the cross-linking agent need not be 100% soluble in the liquid medium, for example a small percentage (for example less than 1 % by weight of the total cross-linking agent) of the cross-linking agent may be insoluble in the liquid medium. Preferably the cross-linking agent is entirely soluble in the liquid medium.

Soluble cross-linking agents are distinguished from media insoluble cross-linking agents as described in US 6262152 and WO 00/20520, which are insoluble and must be dispersed in a liquid medium using a surfactant or dispersant.

The cross-linking group(s) in the cross-linking agent and the cross-linkable group(s) in the poly vinyl dispersant are chosen as a co-reactive pair. Table 1 indicates preferred pairs of cross-linking and cross-linkable groups.

TABLE 1

| Cross-linkable group in the poly vinyl dispersant | Cross-linking groups in the cross-linking agent |
|---|---|
| Epoxy | Amine, anhydride, thiol, acid, hydrazide, phenolic, N-alkyol. |
| Hydroxy / thiol | Isocyanates, epoxy, anhydride, acid, N-alkoyl, carbodiimide, aziridine. |
| Anhydride, acid chloride, carboxylic acid | Epoxy, amine, hydroxy, isocyanate, aziridine, carbodiimide, thiol. |
| aldehyde, keto, beta-diketoester | Amine, imine, thiol, hydrazide, activated olefin, diazonium, carbonyl containing. |
| Activated olefinic bond | Amine , thiol, radical initiator, dienes (Diels-alder reactive), enolate anions. |
| Amine / Hydrazine / Imine / thiol | Epoxy, isocyanate, aldehyde, ketone beta-diketoester, activated olefinic bond, N-alkoyl. |
| Silane, halosilane, alkoxy silane, acetosilane, silicate, silanol silicate, | Hydroxy, acid, isocyanate, silane, halosilane, alkoxy silane, acetosilane, silanol. |
| Vinyls especially, (meth) acrylates | Vinyls especially, (meth) acrylates used with an initiator, redox initiator, photoinitiator, free radical initiator. |
| Electrophiles, Freidel Krafts agents, diazonium. | Aromatic groups |

Preferably pairs of cross-linking and cross-linkable groups are used as indicated across the rows of Table 1 but it will be readily apparent that the cross-linking groups on the cross-linking agent can be interchanged with the cross-linkable groups on the poly vinyl dispersant.

Particularly preferred cross-linking groups are activated olefins, diazonium and carbonyl containing groups and especially amine, imine, hydrazide and thiol groups. Amine, imine, hydrazide and thiol cross-linking groups are preferably paired with keto, aldehyde and especially beta-diketoester cross-linkable groups. Such pairing of cross-linkable and cross-linking groups is preferred as milder reaction conditions are facilitated.

The cross-linking agent must have at least one cross-linking group which is reactive towards the cross-linkable group(s) on the dispersant. In order that a single group can cross-link it should be such that it can bond to two or more poly vinyl dispersant cross-linkable groups. Preferred examples of cross-linking groups which can form two or more bonds per group are unsaturated groups such as aromatic groups (e.g. those containing the residues of benzene, naphthalene and the like), ethylenic groups, and acetylenic groups. Especially preferred cross-linking groups which can form two or more bonds per group are vinyl groups and more especially (meth) acrylate groups.

When present cross-linkable vinyl groups in the poly vinyl dispersant are preferably reacted with a cross-linking agent which has one or more vinyl groups which are preferably (meth) acrylate groups. The reaction between cross-linking and cross-linkable vinyl groups is preferably facilitated by the presence of an initiator in the liquid medium. Preferably the initiator is a free radical initiator.

The cross-linking agent preferably has two or more cross-linking groups. These groups may be the different but are preferably the same. Preferred cross-linking agents have from two to ten cross-linking groups. Two or more cross-linking agents can be used. In such case these may have a different number of cross-linking groups and/or may use different types of cross-linking groups.

Preferred poly vinyl dispersants are poly styrenics, poly (meth) acrylates and copolymers comprising one or both thereof.

Preferably the poly vinyl dispersant has a number average molecular weight of from 500 to 100,000, more preferably from 1,000 to 50,000 and especially from 1,000 to 35,000.

Preferred poly vinyl dispersants comprise both hydrophilic and hydrophobic monomers.

The poly vinyl dispersants are preferably alternating or random (e.g. having statistically short blocks or segments) but can be block or graft (e.g. having longer blocks or segments). Poly vinyl dispersants can be branched or star but are preferably linear. Poly vinyl dispersants may have two or more segments but are preferably random.

In embodiments where the poly vinyl dispersant has two or more segments it is preferred that at least one segment is hydrophobic and at least one segment is hydrophilic relative to each other. A preferred method for making hydrophilic and hydrophobic segments is by the polymerisation of hydrophilic and hydrophobic monomers respectively. Where the dispersant has at least one hydrophilic and at least one hydrophobic segment the cross-linkable group can be situated in a hydrophobic segment, in a hydrophilic segment or in both.

Hydrophilic monomers are those monomers comprising hydrophilic groups which may be ionic or non-ionic groups. The ionic groups may be cationic but are preferably anionic. Both cationic and anionic groups may be used to give an amphoteric poly vinyl dispersant. Preferred anionic groups are phenoxy, carboxylic acid, sulphonic acid and phosphoric acid groups which may be in the free acid or salt form. Preferred salts forms are ammonium, substituted ammonium, quaternary ammonium, sodium, lithium and potassium salts.

Preferred cationic groups are substituted ammonium, quaternary ammonium, benzalkonium, guanidine, biguanidine and pyridinium. These can be in the form of a free base or a salt (e.g. a hydroxide, sulphate, nitrate, chloride, bromide, iodide or fluoride salt or in the form of a quaternary ammonium salt formed with for example an alkyl halide or dimethyl sulphate).

Preferred non-ionic groups are glucosides, saccharides, pyrrolidone, acrylamide residues and especially ethyleneoxy and hydroxy groups. The poly vinyl dispersant can contain a single non-ionic group, several non-ionic groups throughout the dispersant or one or more polymeric chains containing non-ionic groups. Hydroxy groups can be incorporated using polymeric chains such as polyvinylalcohol, polyhydroxyl functional acrylics and celluloses. Ethyleneoxy groups can be incorporated using polymeric chains such as polyethyleneoxide.

Hydrophobic monomers are those monomers comprising hydrophobic groups. Preferred hydrophobic groups are predominantly hydrocarbons, fluorocarbons and alkyl siloxanes comprising less than three and more preferably no hydrophilic groups. The hydrophobic group is preferably a $C_{3-50}$ chain which can be pendant or in chain with the hydrophobic monomer.

Poly vinyl dispersants may be made by any means known in the art. A preferred method for making poly vinyl dispersants is free radical polymerisation of vinyl monomers, especially (meth)acrylates, vinyl monomer containing aromatic groups such as vinyl naphthalene and styrenic monomers. Suitable free radical polymerisation methods include but are not limited to suspension, solution, dispersion and preferably emulsion polymerisation.

Poly vinyl dispersants which contain the residue of both hydrophilic and hydrophobic monomers can be made essentially without segments. Using cost effective, conventional and robust free radical polymerisation methods the segment length is often statistically very short or effectively non existent. This is the case in what are often referred to as "random" polymerisations. Thus, in order to produce less preferred segment structures with longer segment lengths polymerisation methods such as living polymerisations and especially group transfer polymerisation, atom transfer polymerisation, macromonomer polymerisation, graft polymerisation and anionic or cationic polymerisation are required

Suitable hydrophilic vinyl monomers include non-ionic and ionic monomers.

Preferred non-ionic vinyl monomers are those containing saccharide, glucoside, amide, pyrrolidone and especially hydroxy and ethoxy groups.

Preferred examples of non-ionic vinyl monomers include hydroxy ethylacrylate, hydroxy ethyl methacrylate, vinyl pyrrolidone, ethoxylated (meth)acrylates and (meth)acrylamides.

The ionic vinyl monomer may be cationic but is preferably anionic. Preferred anionic vinyl monomers are those comprising phosphoric acid groups, sulphonic acid groups and especially carboxylic acid groups which may be in the free acid (protonated) form or salt form. The salts are as described hereinbefore. Preferred examples are acrylic acid, methacrylic acid, itaconic acid, $\beta$-carboxy ethyl acrylate, maleic acid, monoalkyl itaconates (for example, monomethyl maleate, monoethyl maleate, monobutyl maleate and monooctyl maleate), citraconic acid, styrenesulfonic acid, vinylbenzylsulfonic acid, vinylsulfonic acid, acryloyloxyalkyl sulfonic acids (for example, acryloyloxymethyl sulfonic acid, acryloyloxyethyl sulfonic acid, acryloyloxypropyl sulfonic acid and acryloyloxybutyl sulfonic acid), methacryloyloxymethyl sulfonic acid, methacryloyloxyethyl sulfonic acid, methacryloyloxypropyl sulfonic acid and methacryloyloxybutyl sulfonic acid), 2-acrylamido-2-alkylalkane sulfonic acids (for example, 2-acrylamido-2-methylethanesulfonic acid, 2-acrylamido-2-methylpropanesulfonic acid and 2-acrylamido-2-methylbutane sulfonic acid), 2-methacrylamido-2-alkylalkane sulfonic acids (for example, 2-methacrylamido-2-methylethanesulfonic acid, 2-methacrylamido-2-methylpropanesulfonic acid and 2-methacrylamido-2-methylbutanesulfonic acid), mono-(acryloyloxyalkyl)phosphates (for example, mono(acryloyloxyethyl)phosphate and mono(3-acryloyloxypropyl)phosphates) and mono(methacryloyloxyalkyl)phosphates (for example, mono(methacryloyloxyethyl)phosphate and mono(3-methacryloyloxypropyl)phosphate).

Especially preferred vinyl anionic monomers are acrylic acid, itaconic acid, β-carboxy ethyl acrylate, maleic acid and most especially methacrylic acid.

Preferred cationic monomers are those comprising substituted amine, quaternary amine, pyridine, guanidine and/or biguanidine groups. Especially preferred cationic acrylic monomers include dimethyl amino ethyl (meth)acrylate, diethyl amino ethyl (meth)acrylate, vinyl pyridine, dimethyl amino propyl methacrylamide and dimethyl amino butyl acrylate. These can be in the form of the free base (unprotonated), in the form of salt or in the form of a quaternary ammonium salt.

Preferred hydrophobic vinyl monomers have no hydrophilic groups. Preferred hydrophobic vinyl monomers include $C_{1-20}$-hydrocarbyl (meth)acrylates, butadiene, styrene and vinyl naphthalene. Especially p referred $C_{1-20}$-hydrocarbyl (meth)acrylates a re butyl (meth)acrylate, octyl (meth)acrylate, 2-ethyl hexyl (meth) acrylate, isobornyl acrylate, lauryl acrylate and stearyl acrylate. Other preferred hydrophobic vinyl monomers are the poly propyleneoxy (meth) acrylates which may be optionally alky (e.g. methyl) end-capped.

A review by Mannhold, R. and Dross ,K. (Quant. Struct-Act. Relat. 15, 403-409, 1996) describes 14 methods for calculating Log P values of compounds and especially drugs. From this review we prefer the "fragmental methods" and especially the fragmental method implemented by ACD labs software.

The calculated Log P of a dispersant may be calculated using commercially available computer software, for example using the Log P DB software version 7.04 or a later version of such software (which is available from Advanced Chemistry Development Inc (ACD labs)). Any ionic or ionisable groups are calculated in their neutral (unionised) form.

The Log P may be calculated f or the entire poly vinyl dispersant, however, we prefer to calculate the Log P values for the monomers present in the poly vinyl dispersant

The calculated Log P may be derived from a weight contribution equation (1) based on its monomer components:

$$\text{calculated Log P (polymeric dispersant)} = \sum[W(i) \times \text{calc Log P}(i)]$$

$$\text{Equation (1)}$$

wherein W(i) is the weight fraction of monomer (i) based on the total weight of poly vinyl dispersant and calc Log P(i) is the calculated Log P of that monomer.

Table 2 lists some Log P values calculated by the ACD labs software version 7.04 for several well known monomers used to make poly vinyl dispersants.

TABLE 2

| Monomer component of the dispersant | ACD labs Log P DB |
|---|---|
| Acrylic acid (neutral form) | 0.28 |
| Methacrylic acid (neutral form) | 0.83 |
| Methyl methacrylate | 1.35 |
| Acetoacetoxy ethyl methacrylate | 1.62 |
| 2-Ethyl hexyl acrylate | 4.33 |
| 2-Hydroxy ethyl acrylate | -0.05 |
| n-Butyl acrylate | 2.39 |
| Dimethyl amino ethyl methacrylate | 1.50 |
| 2-ethyl hexyl methacrylate | 4.88 |
| 2-hydroxy ethyl methacrylate | 0.50 |
| Glycidyl methacrylate | 1.39 |
| Styrene | 2.70 |
| n-Butyl methacrylate | 2.94 |
| Diacetone acrylamide | -0.05 |

Table 2 lists preferred monomeric components of poly vinyl dispersants and their associated calculated Log P values. Thus, by example, a dispersant comprising 40% by weight styrene residues and 60% by weight 2-hydroxy ethyl acrylate residues has a calculated Log P value of [(0.4 x 2.70) + (0.6 x -0.05)] which is 1.05.

The poly vinyl dispersant preferably has a calculated Log P of not less than 0. We find that very hydrophilic poly vinyl dispersants tend not to adsorb well onto a particulate solid and are less effective in milling and stabilising the particulate solid in the liquid medium. Hence, a preferred poly vinyl dispersant has a calculated Log P of from 0 to 1.8, more preferably from 0 to 1.7 and especially from 1 to 1.65.

The poly vinyl dispersant must have at least one cross-linkable group but more preferably has two or more cross-linkable groups. The cross-linkable groups may be the same or different. Higher numbers of cross-linable groups promote faster and more effective cross-linking.

Preferred cross-linkable group or groups in the poly vinyl dispersant are as indicated in Table 1, column 1. It is, of course, perfectly possible to interchange the dispersant cross-linkable group with the cross-linking agent cross-linking group. Preferred co-reactive pairs of poly vinyl dispersant cross-linkable group and cross-linking agent cross-linking group are as hereinbefore described in Table 1.

The cross-linkable group in the poly vinyl dispersant is preferable incorporated by means of polymerising or copolymerising a vinyl monomer comprising the cross-linkable group.

Many vinyl monomers with cross-linkable groups are commercially available, for example, from the PolySciences Inc catalogue 2002-2003, pages 212 to 213.

Preferred cross-linkable groups are keto, aldehyde and especially a beta-diketoester groups. The cross-linkable group or groups are preferably incorporated by means of a keto, aldehyde or beta-diketoester functional vinyl monomer which is then polymerised with other vinyl monomers to give the poly vinyl dispersant.

Preferred vinyl monomers containing at least one keto, aldehyde or beta-diketoester group are acrolein, methyl vinyl ketone, and especially diacetone acrlyamide and acetoacetoxy ethylmethacrylate. Hence preferred poly vinyl dispersants comprise at least one residue of such monomers

Preferably the vinyl monomer containing at least one keto, aldehyde or beta-diketoester group is incorporated at from 80 to 0.1 mole%, more preferably from 70 to 5 mole% and especially from 70 to 10 mole% based on all the monomers used to make the dispersant.

The acid value (AV) of the poly vinyl dispersant is preferably from 60 to 120mg KOH / g of the dispersant.

More than one type of poly vinyl dispersant may be present in the process.

The poly vinyl dispersant need not be totally soluble in the liquid medium. That is to say perfectly clear and non-scattering solutions are not essential. The poly vinyl dispersant may aggregate in surfactant-like micelles giving slightly hazy solutions in the liquid medium. Further the poly vinyl dispersant may be such that some proportion of the dispersant tends to form a colloidal or micellar dispersion. It is preferred that the poly vinyl dispersant produces uniform and stable dispersions in the liquid medium which do not settle or separate on standing.

It is preferred that the poly vinyl dispersant is substantially soluble in the liquid medium giving rise to clear or hazy solutions.

Preferred poly vinyl dispersants are random and tend to give clear compositions whilst less preferred dispersants with two or more segments tend to give rise to the aforementioned hazy compositions in liquid media.

The poly vinyl dispersant is preferably chosen to suit the liquid medium to be used in the process for preparing the encapsulated particulate solid and optionally also any liquid vehicle to be used in the final intended composition in which the encapsulated particulate solid will be used (e.g. an ink or paint). Thus, for example, where the encapsulated particulate solid is to be used in an aqueous ink jet ink the poly vinyl dispersant preferably has a predominantly hydrophilic character. Similarly where the encapsulated particulate solid is to be used in an oil-based paint or ink the poly vinyl dispersant preferably has a predominantly hydrophobic character.

Preferably the reaction is performed by mixing the particulate solid, the poly vinyl dispersant, the cross-linking agent and the liquid medium. Preferably the weight ratio of the particulate solid to liquid medium is from 1:100 to 1:2.5, more preferably 1:100 to 1:3, especially 1:100 to 1:5. Preferably the weight ratio of the poly vinyl dispersant to the liquid medium is 1:1000 to 1:2.5, more preferably 1:100 to 1:3.3, especially 1:100 to 1:5. Preferably the cross-linking agent is present in the liquid medium at a concentration such that the molar ratio of cross-linking groups in the cross-linking agent to the cross-linkable groups in the poly vinyl dispersant is from 10:1 to 1:10, more preferably from 5:1 to 1:5 and especially from 2:1 to 1:2. This typically equates a weight ratio of cross-linking agent to liquid medium of 1:10,000 to 1:10, more preferably 1:2,000 to 1:20.

Thus preferably the reaction is performed by mixing the following components:

  a) the liquid medium;
  b) the particulate solid in a weight ratio of 1:100 to 1:3, more preferably 1:100 to 1:5;
  c) the poly vinyl dispersant in a weight ratio of 1:100 to 1:3.3, more preferably 1:100 to 1:5; and
  d) the cross-linking agent in a weight ratio of 1:10,000 to 1:10; more preferably 1:2000 to 1:20;

wherein all weight ratios are relative to the weight of the liquid medium.

The mixing may be performed by any method, e.g. mechanical agitation, stirring and so on. Low temperatures for reaction are preferred as this results in lower levels of flocculation and particle size growth of the particulate solid in the liquid medium. Preferably the reaction is performed at a temperature of less than 100°C, more preferably less than 80°C, especially less than 60°C, more especially at less than 40°C. The lower temperature limit for reaction is determined by the freezing point of the liquid medium and the desired rate of reaction but a preferred lower limit is 0°C.

The time for the reaction depends to some extent on the temperature and presence or absence of a catalyst. However, a preferred time is from 1 to 24 hours, more preferable from 1 to 8 hours. If desired a catalyst may be added to speed up the reaction.

The particulate solid, the liquid medium and the poly vinyl dispersant may be mixed in any order or simultaneously. The mixture is optionally subjected to a mechanical treatment to reduce the particle size of the solid to a desired size, for example by ball milling, bead milling, gravel milling or by more elaborate techniques such as microfluidizing (using a Microfluidics™ machine) or using hydrodynamic cavitation (using for example the CaviPro™ device) until the desired particle size is achieved. The particulate solid may be treated to reduce its particle size independently or in admixture with the liquid medium and/or the poly vinyl dispersant, the other component or components then being added and the mixture being agitated to provide the dispersion.

If desired the dispersion may be filtered or centrifuged to remove any poorly dispersed or over-sized particulate material prior to reacting. In particular the process preferably comprises filtering a mixture comprising the poly vinyl dispersant, a particulate solid and liquid medium prior to reacting, preferably through a filter having a pore size of less than 10, more preferably less than 5 and especially less than 1 micron.

If the cross-linking agent is present during mechanical treatment of the particulate solid this can result in undesirable pre-reaction of the dispersion before the particle size of the solid has been fully reduced. When the particulate solid is milled in the presence of the poly vinyl dispersant and the liquid medium the temperature is preferably not greater than 40°C and especially not greater than 30°C.

The cross-linking agent is preferably added to a mixture comprising the particulate solid, poly vinyl dispersant and liquid medium after any optional mechanical treatment to reduce the particle size of the particulate solid. Reaction can occur whilst the cross-linking agent is being added but it is more preferred that most of the reaction occurs after complete addition of the cross-linking agent. It is also preferred that less than 10% reaction has occurred 30 minutes after the complete addition of the cross-linking agent. This facilitates more uniform dispersion of the cross-linking agent throughout the composition and results in more uniform reaction.

To delay reaction until the cross-linking agent has been added to a mixture comprising the particulate solid, poly vinyl dispersant and liquid medium the cross-linking agent is preferably added to said mixture at a temperature below 60°C and especially below 30°C. Also it is preferred that where the process uses a catalyst to increase the speed of the reaction this is added after the addition of the cross-linking agent.

The process preferably results in an encapsulated particulate solid having a Z-average particle size of at most 50% greater than the Z-average particle size of the particulate solid prior to addition of the cross-linking agent.

Preferably the encapsulated particulate solid has a Z-average particle size of less than 300nm, more preferably from 10 to 300nm and especially from 50 to 180nm. Such particles are particularly useful in paints, inks and especially in ink jet printing inks. Particles of less than 300nm in size are especially difficult to stabilise effectively. It is believed that the selection of the dispersant having the aforementioned calculated Log P values is especially helpful in enhancing the dispersion stability of such small particles prior to, during and after encapsulation.

The Z-average particle size may be measured by any means known but a preferred method is via photo correlation spectroscopy techniques as available from Malvern™ and Coulter™.

It will be understood that the encapsulated particulate solid prepared by the present invention is particulate both with respect to the initial solid and with respect to the resultant product. Accordingly, the present invention does not relate to processes, which react so as to form a solid, semi-solid, gel or coating.

The particulate solid resulting from the process of the present invention will preferably be present in the liquid medium as a dispersion. Preferably this dispersion is substantially uniform.

If desired the process may further comprise the step of isolating the resultant encapsulated particulate solid from the liquid medium. This may be achieved by, for example, evaporating the liquid medium, or by precipitation or flocculation of the encapsulated particulate solid followed by filtration.

Preferred methods of evaporation include freeze drying, spray drying and agitated drying. Preferred methods of precipitation and flocculation include the addition of metal salts and centrifugation.

According to a second aspect of the present invention there is provided an encapsulated particulate solid obtainable or obtained by the process of the first aspect of the present invention.

The encapsulated particulate solid prepared by the process of the present invention is useful in the manufacture of compositions comprising the encapsulated particulate solid and a liquid vehicle. Preferably such compositions are inks and the particulate solid is a colorant, especially a pigment.

Thus, according to a third aspect of the present invention there is provided a composition comprising a liquid vehicle and an encapsulated particulate solid obtained or obtainable by a process according to the first aspect of the present invention.

The compositions may be prepared by diluting the product of the process, or by isolating the product of the process and mixing the isolated encapsulated particulate solid with a liquid vehicle. It is preferable to prepare the composition by adding desired liquid vehicle components to the composition comprising the encapsulated particulate solid and the liquid medium resulting from the process according to the first aspect of the present invention. This process, which does not isolate the encapsulated particulate solid in a "dry state", tends to result in smaller particle size of the encapsulated particulate solid.

The liquid vehicle is the liquid or liquid mixture present in an "end use" composition such as an ink, a paint or the like. The liquid vehicle may be identical to or different from the liquid medium used in the process for preparing the encapsulated solid. In some instances the product of the process of the present invention may be directly useful in an "end use" application. That is to say the liquid vehicle is the liquid medium. It is often desirable that the liquid vehicle comprises high proportions of water and that further liquids required to make the desired composition (e.g. an ink) are added after the process according to the first aspect of the present invention.

The liquid vehicle is preferably an organic liquid, water or a mixture comprising an organic liquid and water.

Preferably the liquid vehicle comprises water, especially when the compositions are intended for use in ink jet printing. Preferably the liquid vehicle comprises from 50 to 95%, more preferably from 60 to 95% and especially from 60 to 90% water by weight based on the total weight of the composition.

In the case of ink jet printing compositions it is preferable that the liquid vehicle comprises both water and an organic liquid which is preferably a water-miscible organic liquid. Preferred water-miscible organic liquids for inclusion into the liquid vehicle include $C_{1-6}$-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; water-miscible ethers, preferably tetrahydrofuran and dioxane; diols, preferably diols having from 2 to 12 carbon atoms, for example ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably glycerol and 1,2,6-hexanetriol; mono-$C_{1-4}$-alkyl ethers of diols, preferably mono-$C_{1-4}$-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy) ethoxy]ethanol, 2-[2-(2-ethoxyethoxy)-ethoxy]-ethanol and ethyleneglycol monoallylether; cyclic amides, preferably 2-pyrrolidone, N-methyl-2-pyrrolidone, N-ethyl-2-pyrrolidone, caprolactam and 1,3-dimethylimidazolidone. Preferably the liquid vehicle comprises water and 2 or more, especially from 2 to 8, water-miscible organic liquids.

Especially preferred water-miscible organic liquid are cyclic amides, especially 2-pyrrolidone, N-methyl-pyrrolidone and N-ethyl-pyrrolidone; diols, especially 1,5-pentane diol, ethyleneglycol, thiodiglycol, diethyleneglycol and triethyleneglycol; and mono- $C_{1-4}$-alkyl and $C_{1-4}$-alkyl ethers of diols, more preferably mono- $C_{1-4}$-alkyl ethers of diols having 2 to 12 carbon atoms, especially 2-methoxy-2-ethoxy-2-ethoxyethanol; and glycerol.

A preferred composition comprises:

a) from 0.1 to 50 parts, more preferably from 1 to 25 parts, of an encapsulated particulate solid obtainable or obtained by a process according to the first aspect of the present invention; and
b) from 50 to 99.9 parts, more preferably from 99 to 75 parts, of a liquid vehicle comprising water, an organic liquid or both water and an organic liquid;

wherein all parts are by weight and the amount of components a) and b) add to 100 parts.

When both water and organic liquid are present in the liquid vehicle the weight ratio of water to organic liquid is preferably in from 99:1 to 5:95, more preferably from 95:5 to 60:40, especially from 95:5 to 80:20.

The compositions of the present invention are particularly suitable for ink jet printer inks, especially where the particulate solid is a pigment.

In the case of ink jet printing inks the composition according to the third aspect of the present invention preferably has a viscosity of less than 50mPa.s, more preferably less than 20mPa.s and especially less than 10mPa.s at a temperature of 25°C.

In the case of ink jet printing inks it is preferred that the composition according to the third aspect of the present invention preferably has a surface tension from 20 to 65 dynes/cm, more preferably from 25 to 50 dynes /cm at a temperature of 25°C.

The ink jet printer compositions according to the third aspect of the present invention may also contain additional components conventionally used in ink jet printing inks, for example viscosity modifiers, pH buffers (e.g. 1:9 citric acid/ sodium citrate) corrosion inhibitors, biocides, dyes and kogation reducing additives.

According to a fourth aspect of the present invention there is provided a process for printing an image on a substrate comprising applying a composition according to the third aspect of the present invention to the substrate, preferably by means of an ink jet printer.

According to a fifth aspect of the present invention there is provided a paper, a plastic film or a textile material printed with a composition according to the third aspect of the present invention, preferably by means of an ink jet printer. Preferred papers are plain or treated papers which may have an acid, alkaline or neutral character. Examples of commercially available papers include, HP Premium Coated Paper, HP Photopaper (all available from Hewlett Packard Inc), Stylus Pro 720 dpi Coated Paper, Epson Photo Quality Glossy Film, Epson Photo Quality Glossy Paper (available from Seiko Epson Corp.), Canon HR 101 High Resolution Paper, Canon GP 201 Glossy Paper, Canon HG 101 High Gloss Film (all available from Canon Inc.), Wiggins Conqueror paper (available from Wiggins Teape Ltd), Xerox Acid Paper and Xerox Alkaline paper, Xerox Acid Paper (available from Xerox).

The plastic film may be opaque or transparent. Transparent plastic films which are suitable for use as overhead projector slides, include for example polyesters (especially polyethylene terephthalate), polycarbonates, polyimides, polystyrenes, polyether sulphones, cellulose diacetate and cellulose triacetate films.

According to a sixth aspect of the present invention there is provided an ink jet printer cartridge comprising a chamber and a composition according to the third aspect of the present invention wherein said composition is present in the chamber.

Encapsulated particulate solids obtainable or obtained by the process of the present invention are particularly suitable for use in surface coatings and paints which comprise an encapsulated particulate solid, a liquid vehicle and a binder. The particulate solid is preferably a colorant or a filler. As with inks the paint can be made using the isolated encapsulated particulate solid but it is more preferred to use the composition comprising the encapsulated particulate solid and the liquid medium which results from the process according to the first aspect of the invention.

Thus, according to an seventh aspect of the present invention there is provided a composition comprising an encapsulated particulate colorant or filler obtainable or obtained by a process according to the first aspect of the present invention, a binder and a liquid vehicle. The binder is a polymeric material capable of binding the composition on the evaporation of the liquid medium.

Suitable binders include natural and synthetic polymers. Preferred binders include poly(meth)acrylates, polystyrenics, polyesters, polyurethanes, alkyds, polysaccharides (e.g. cellulose) and proteins (e.g. casein). Preferably the binder is present in the composition at more than 100%, more preferably 200%, especially 300% and most preferably more than 400% based on the weight of the particulate solid.

The invention is further illustrated by the following Examples in which all parts and percentages are by weight unless otherwise stated.

Example 1

Preparation of Dispersant (1)

A monomer feed composition was prepared by mixing methacrylic acid (129 parts), methyl methacrylate (70.5 parts), diacetoneacrylamide (190.5 parts), styrene (360 parts) and isopropanol (375 parts). An initiator feed composition was prepared by mixing 2,2'-azobis(2-methylbutyronitrile) (22.05 parts) and isopropanol (187.5 parts).

Isopropanol (187.5 parts) was heated to 80°C in a reactor vessel, continuously stirred and purged with a nitrogen gas atmosphere. The monomer feed and the initiator feed compositions were slowly fed into the reactor vessel whilst stirring the contents, maintaining the temperature at 80°C and maintaining the nitrogen atmosphere. The monomer and initiator feeds were fed into the reactor over 2 hours. The reactor vessel contents were maintained at 80°C for a further 4 hours after complete addition of the initiator feed before cooling to 25°C. The product obtained was an acrylic polymer in solution having a solids content of 49.5% by weight. The acrylic polymer was isolated by rotary evaporation under reduced pressure. The acrylic polymer had a number average molecular weight of 9,961, a weight average molecular weight of 17,215 and polydispersity 1.7 as measured by GPC. This is Dispersant (1). The calculated log P of Dispersant (1) is 1.55 according to the Log P DB software version 7.04 available from Advanced Chemistry Development Inc (ACD labs).

Dispersant Solution (1)

Dispersant (1) (150 parts) was dissolved in water (470 parts) and neutralised with aqueous potassium hydroxide solution to give an aqueous solution of pH 7.7. This is Dispersant Solution (1).

Mill-base (1)

A particulate solid (C.I. Pigment Blue 15:3, 60 parts, ex Sun) was mixed with Dispersant Solution (1) (340 parts). The mixture was milled in a Blackley mill for a period of 3 hours. This resulted in a mill-base comprising a particulate solid of Z-average particle size of 104nm and a pigment content of 15% solids by weight. This is Mill-base (1).

Cross-linking of Dispersant (1) to Encapsulate a Particulate Solid

A cross-linking agent having two cross-linking groups (Adipic dihydrazide, 0.686 parts in water, 6.8 parts) was slowly added to Mill-base (1) (50 parts) at a temperature of about 25°C and the mixture was stirred for 6 hours at a temperature of 50°C. The resultant encapsulated particulate solid had a Z-average particle size of 114nm which had increased in size by only 9%. This is Encapsulated Particulate Solid (1).

Tests

Thermal Stability

Samples of Mill Base (1) and Encapsulated Particulate Solid (1) were stored at a temperature of 60°C for duration of 2 weeks. After this time the Z- average particle size was remeasured and the percentage growth was calculated. Table 3 summaries the results.

Table 3

| Sample | %Growth |
|---|---|
| Mill-base (1) | 12.5 |
| Encapsulated Particulate Solid (1) | 0.0 |

A higher particle size growth corresponds to a less stable dispersion.
Table 3 shows that the encapsulated particulate solid shows superior thermal stability to the unencapsulated equivalent mill-base.

Solvent Resistance

The solvent resistance of Mill-base (1) and Encapsulated Particle Solid (1) to organic liquids was measured by adding them to butoxyethanol/water mixtures. The maximum concentration of butoxyethanol for which the mixture was stable was assessed visually. The results are shown in Table 4:

Table 4

| Sample | % Butoxy ethanol |
|---|---|
| Millbase (1) | 10% |
| Encapsulated Particulate Solid (1) | 50% |

The encapsulated particulate solid of the present invention shows much improved solvent resistance over unencapsulated equivalent mill-base.

Ink Testing

Table 5

| Ink Formulation | Ink 1 | Ink 2 |
|---|---|---|
| Encapsulated Pigment Solid (1) | 20 | |
| Mill-base (1) | | 20 |
| 2-Pyrrollidone | 2 | 2 |
| 1,5 Pentane Diol | 5 | 5 |
| Glycerol | 10 | 10 |

(continued)

| Ink Formulation | Ink 1 | Ink 2 |
|---|---|---|
| Tegowet™ 510 | 0.5 | 0.5 |
| Water | 64 | 64 |
| Tegowet™ 510 is a wetting agent available from Tego. | | |

Ink compositions were made by mixing the components down each column of Table 5. The Z-average particle size growth and viscosity increase were measured after mixing and following storage for 2 weeks at 60°C. Ink 1 (comprising the encapsulated particulate solid) showed no observable viscosity rise and less than 5% growth in the Z-average particle size following storage. Ink 2 (comprising the Mill-base) showed visible thickening and greater than 50% particle size growth following storage for 2 weeks at 60°C. Thus, the encapsulated particulate solid prepared by the process of the present invention shows greater stability than the unencapsulated equivalent mill-base.

**Claims**

1. A process for preparing an encapsulated particulate solid comprising reacting a poly vinyl dispersant with a cross-linking agent in the presence of a particulate solid and a liquid medium, **characterised in that:**

   a) the poly vinyl dispersant has a calculated Log P of less than 1.8, at least one cross-linkable group and an acid value of from 30 to 150mg KOH/g of dispersant;
   b) the cross-linking agent is substantially soluble in the liquid medium and has at least one cross-linking group which is reactive towards the cross-linkable group(s) of the dispersant; and
   c) the reaction comprises cross-linking the poly vinyl dispersant with the cross-linking agent, thereby encapsulating the particulate solid within the cross-linked dispersant.

2. A process according to claim 1 wherein the poly vinyl dispersant has a calculated Log P of from 0 to 1.7.

3. A process according to any one of the preceding claims wherein the reaction is performed at a temperature of less than 60°C.

4. A process according to any one of the preceding claims wherein the resultant encapsulated particulate solid has a Z-average particle size of at most 50% greater than the Z-average particle size of the particulate solid prior to addition of the cross-linking agent.

5. A process according to any one of the preceding claims wherein the poly vinyl dispersant has an acid value of from 60 to 120mg KOH / g of dispersant.

6. A process according to any one of the preceding claims wherein the poly vinyl dispersant has at least one keto, aldehyde or beta-diketoester cross-linkable group.

7. A process according to claim 6 wherein the cross-linking agent has at least one amine, imine, hydrazide or thiol cross-linking group.

8. A process according to any one of the preceding claims wherein the liquid medium comprises water.

9. A process according to any one of the preceding claims wherein the particulate solid is a pigment.

10. A process according to any one of the preceding claims comprising the further step of isolating the resultant encapsulated particulate solid from the liquid medium.

11. A process according to any one of the preceding claims wherein the reaction is performed by mixing the following components:

a) the liquid medium;
b) the particulate solid in a weight ratio of 1:100 to 1:3;
c) the poly vinyl dispersant in a weight ratio of 1:100 to 1:3.3; and
d) the cross-linking agent in a weight ratio of 1:10,000 to 1:10;

wherein all weight ratios are relative to the weight of the liquid medium.

12. A process according to claim 11 wherein the liquid medium, the particulate solid and the poly vinyl dispersant are mixed and the mixture is subjected to a mechanical treatment to reduce the particle size of the particulate solid which is followed by the addition of the cross-linking agent to said mixture.

13. An encapsulated particulate solid obtained or obtainable by a process according to any one of the preceding claims.

14. A composition comprising a liquid vehicle and an encapsulated particulate solid according to claim 13.

15. A composition according to claim 14 having a viscosity of less than 20mPa.s at 25°C.

16. A composition according to claim 14 or 15 wherein the liquid vehicle comprises water and an organic liquid in a weight ratio of 99:1 to 5:95.

17. A process for printing an image on a substrate comprising applying a composition according to claim 14, 15 or 16 to the substrate.

18. A process according to claim 17 wherein the printing is performed by means of an ink jet printer.

19. A paper, a plastic film or a textile material printed with a composition according to claim 14, 15 or 16 by means of a process according to claim 17 or 18.

20. An ink jet printer cartridge comprising a chamber and a composition wherein the composition is present in the chamber and the composition is as claimed in claim 14, 15 or 16.

21. A composition according to claim 14 where the particulate solid is a colorant or a filler and the composition further comprises a binder.

**Patentansprüche**

1. Verfahren zur Herstellung eines umhüllten partikulären Feststoffs, bei dem man ein Polyvinyl-Dispergiermittel in Gegenwart eines partikulären Feststoffs und eines flüssigen Mediums mit einem Vernetzungsmittel umsetzt, **dadurch gekennzeichnet, daß:**

   a) das Polyvinyl-Dispergiermittel einen berechneten Log-P-Wert von weniger als 1,8, mindestens eine vernetzbare Gruppe und eine Säurezahl von 30 bis 150 mg KPH/g Dispergiermittel aufweist;
   b) das Vernetzungsmittel in dem flüssigen Medium weitgehend löslich ist und mindestens eine vernetzungsaktive Gruppe, die gegenüber der vernetzbaren Gruppe bzw. den vernetzbaren Gruppen des Dispergiermittels reaktiv ist, aufweist und
   c) die Umsetzung die Vernetzung des Polyvinyl-Dispergiermittel mit dem Vernetzungsmittel umfaßt, wodurch der partikuläre Feststoff mit dem vernetzten Dispergiermittel umhüllt wird.

2. Verfahren nach Anspruch 1, bei dem das Polyvinyl-Dispergiermittel einen berechneten Log-P-Wert von 0 bis 1,7 aufweist.

3. Verfahren nach einem der vorhergehenden Ansprüche, bei dem man die Umsetzung bei einer Temperatur von weniger als 60°C durchführt.

4. Verfahren nach einem der vorhergehenden Ansprüche, bei dem der resultierende umhüllte partikuläre Feststoff eine Z-mittlere Teilchengröße aufweist, die höchstens 50% über der Z-mittleren Teilchengröße des partikulären Feststoffs vor der Zugabe des Vernetzungsmittels liegt.

**5.** Verfahren nach einem der vorhergehenden Ansprüche, bei dem das Polyvinyl-Dispergiermittel eine Säurezahl von 60 bis 120 mg KOH/g Dispergiermittel aufweist.

**6.** Verfahren nach einem der vorhergehenden Ansprüche, bei dem das Polyvinyl-Dispergiermittel mindestens eine vernetzbare Keto-, Aldehyd- oder beta-Diketoestergruppe aufweist.

**7.** Verfahren nach Anspruch 6, bei dem das Vernetzungsmittel mindestens eine vernetzungsaktive Amin-, Imin-, Hydrazid, oder Thiolgruppe aufweist.

**8.** Verfahren nach einem der vorhergehenden Ansprüche, bei dem das flüssige Medium Wasser umfaßt.

**9.** Verfahren nach einem der vorhergehenden Ansprüche, bei dem es sich bei dem partikulären Feststoff um ein Pigment handelt.

**10.** Verfahren nach einem der vorhergehenden Ansprüche, bei dem man ferner den resultierenden umhüllten partikulären Feststoff aus dem flüssigen Medium isoliert.

**11.** Verfahren nach einem der vorhergehenden Ansprüche, bei dem man die Umsetzung durchführt, indem man die folgenden Komponenten mischt:

a) das flüssige Medium;
b) den partikulären Feststoff in einem Gewichtsverhältnis von 1:100 bis 1:3;
c) das Polyvinyl-Dispergiermittel in einem Gewichtsverhältnis von 1:100 bis 1:3,3 und
d) das Vernetzungsmittel in einem Gewichtsverhältnis von 1:10.000 bis 1:10,

wobei sich alle Gewichtsverhältnisse auf das Gewicht des flüssigen Mediums beziehen.

**12.** Verfahren nach Anspruch 11, bei dem man das flüssige Medium, den partikulären Feststoff und das Polyvinyl-Dispergiermittel mischt, die Mischung einer mechanischen Behandlung zur Verringerung der Teilchengröße des partikulären Feststoffs unterwirft und dann die Mischung mit dem Vernetzungsmittel versetzt.

**13.** Umhüllter partikulärer Feststoff, erhalten oder erhältlich nach einem Verfahren nach einem der vorhergehenden Ansprüche.

**14.** Zusammensetzung, umfassend einen flüssigen Träger und einen umhüllten partikulären Feststoff nach Anspruch 13.

**15.** Zusammensetzung nach Anspruch 14 mit einer Viskosität von weniger als 20 mPa.s bei 25°C.

**16.** Zusammensetzung nach Anspruch 14 oder 15, bei der der flüssige Träger Wasser und eine organische Flüssigkeit in einem Gewichtsverhältnis von 99:1 bis 5:95 umfaßt.

**17.** Verfahren zum Drucken eines Bilds auf einem Substrat, bei dem man eine Zusammensetzung nach Anspruch 14, 15 oder 16 auf ein Substrat aufbringt.

**18.** Verfahren nach Anspruch 17, bei dem man das Drucken mit Hilfe eines Tintenstrahldruckers durchführt.

**19.** Papier, Kunststoffolie oder Textilmaterial, bedruckt mit einer Zusammensetzung nach Anspruch 14, 15 oder 16 oder mit Hilfe eines Verfahrens nach Anspruch 17 oder 18.

**20.** Tintenstrahldruckerpatrone mit Kammer und Zusammensetzung, bei der die Zusammensetzung in der Kammer vorliegt und Anspruch 14, 15 oder 16 entspricht.

**21.** Zusammensetzung nach Anspruch 14, bei der der partikuläre Feststoff ein Farbmittel oder ein Füllstoff ist und die Zusammensetzung ferner ein Bindemittel enthält.

**Revendications**

1. Procédé de préparation d'un solide particulaire encapsulé, comprenant la réaction d'un agent dispersant polyvinyle avec un agent de réticulation en présence d'un solide particulaire et d'un milieu liquide, **caractérisé en ce qui :**

   a) l'agent dispersant polyvinyle présente un Log P calculé inférieur à 1,8, au moins un groupe réticulable et un indice d'acide de 30 à 150 mg KOH/g d'agent dispersant ;
   b) l'agent de réticulation est substantiellement soluble dans le milieu liquide et présente au moins un groupe de réticulation qui est réactif vis-à-vis du (des) groupe(s) réticulable(s) de l'agent dispersant ; et
   c) la réaction comprend la réticulation de l'agent dispersant polyvinyle avec l'agent de réticulation, en encapsulant ainsi le solide particulaire avec l'agent dispersant réticulé.

2. Procédé selon la revendication 1, dans lequel l'agent dispersant polyvinyle présente un Log P calculé de 0 à 1,7.

3. Procédé selon l'une quelconque des revendications précédentes, dans lequel la réaction est effectuée à une température inférieure à 60°C.

4. Procédé selon l'une quelconque des revendications précédentes, dans lequel le solide particulaire encapsulé résultant présente une taille de particule moyenne Z supérieure d'au moins 50 % à la taille de particule moyenne Z du solide particulaire avant l'addition de l'agent de réticulation.

5. Procédé selon l'une quelconque des revendications précédentes, dans lequel l'agent dispersant polyvinyle présente un indice d'acide de 60 à 120 mg KOH/g d'agent dispersant.

6. Procédé selon l'une quelconque des revendications précédentes, dans lequel l'agent dispersant polyvinyle renferme au moins un groupe réticulable céto, aldéhyde ou bêta-dicétoester.

7. Procédé selon la revendication 6, dans lequel l'agent de réticulation renferme au moins un groupe de réticulation amine, imine, hydrazide ou thiol.

8. Procédé selon l'une quelconque des revendications précédentes, dans lequel le milieu liquide comprend de l'eau.

9. Procédé selon l'une quelconque des revendications précédentes, dans lequel le solide particulaire est un pigment.

10. Procédé selon l'une quelconque des revendications précédentes, comprenant l'étape supplémentaire d'isolation du solide particulaire encapsulé résultant à partir du milieu liquide.

11. Procédé selon l'une quelconque des revendications précédentes, dans lequel la réaction est effectuée en mélangeant les composants suivants :

    a) le milieu liquide ;
    b) le solide particulaire en un rapport pondéral de 1:100 à 1:3 ;
    c) l'agent dispersant polyvinyle en un rapport pondéral de 1:100 à 1:3,3 ; et
    d) l'agent de réticulation en un rapport pondéral de 1:10 000 à 1:10 ;

    où tous les rapports pondéraux sont par rapport au poids du milieu liquide.

12. Procédé selon la revendication 11, dans lequel le milieu liquide, le solide particulaire et l'agent dispersant polyvinyle sont mélangés et le mélange est soumis à un traitement mécanique pour réduire la taille de particule du solide particulaire, qui est suivi de l'addition de l'agent de réticulation audit mélange.

13. Solide particulaire encapsulé obtenu ou pouvant être obtenu par un procédé selon l'une quelconque des revendications précédentes.

14. Composition comprenant un véhicule liquide et un solide particulaire encapsulé selon la revendication 13.

15. Composition selon la revendication 14, présentant une viscosité inférieure à 20 mPa.s à 25°C.

**16.** Composition selon la revendication 14 ou 15, dans laquelle le véhicule liquide comprend de l'eau et un liquide organique en un rapport pondéral de 99:1 à 5:95.

**17.** Procédé d'impression d'une image sur un substrat, comprenant l'application d'une composition selon la revendication 14, 15 ou 16 sur le substrat.

**18.** Procédé selon la revendication 17, dans lequel l'impression est effectuée au moyen d'une imprimante à jet d'encre.

**19.** Papier, film plastique ou matière textile imprimés avec une composition selon la revendication 14, 15 ou 16 au moyen d'un procédé selon la revendication 17 ou 18.

**20.** Cartouche d'imprimante à jet d'encre comprenant un compartiment et une composition, où la composition est présente dans le compartiment et la composition est selon la revendication 14, 15 ou 16.

**21.** Composition selon la revendication 14, dans laquelle le solide particulaire est un colorant ou une charge et la composition comprend en outre un liant.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6262152 B
- WO 0020520 A
- JP 9010483 A
- JP 11152424 A
- EP 732381 A
- EP 1086975 A

**Non-patent literature cited in the description**

- **L. G. DANIELSSON ; Y. H. ZHANG.** *Trends in Anal. Chem,* 1996, vol. 15, 188
- *Analytical Sciences,* September 2002, vol. 18, 1015-1020
- **CROWLEY et al.** A Three Dimensional Approach to Solubility. *Journal of Paint Technology,* 1966, vol. 38, 269
- **IBERT MELLAN.** Compatibility and Solubility. Noyes Development Corporation, 1968, 39-40
- **MANNHOLD, R. ; DROSS ,K.** *Quant. Struct-Act. Relat.,* 1996, vol. 15, 403-409
- *PolySciences Inc catalogue,* 2002, 212-213